# FASCICULE DE BREVET EUROPEEN

(11) **EP 3 015 443 B1**
(45) Date de publication et mention de la délivrance du brevet: **16.09.2020**
(21) Numéro de dépôt: 15191476.9
(22) Date de dépôt: 26.10.2015
(51) Int. Cl.: C05B 17/00, C05G 5/12, C05F 1/00, C05F 1/02

(54) **PROCEDE DE FABRICATION D'UNE COMPOSITION D'ENGRAIS ORGANIQUE A BASE DE PLUMES, DISPOSITIF ASSOCIE, COMPOSITION D'ENGRAIS OBTENUE**
HERSTELLUNGSVERFAHREN EINER ORGANISCHEN DÜNGERZUSAMMENSETZUNG AUF DER BASIS VON FEDERN, ENTSPRECHENDE VORRICHTUNG UND SO ERHALTENE DÜNGERZUSAMMENSETZUNG
METHOD FOR PRODUCING AN ORGANIC FERTILISER COMPOSITION USING FEATHERS, ASSOCIATED DEVICE, FERTILISER COMPOSITION OBTAINED

(30) Priorité: 28.10.2014 FR 1460346
(43) Date de publication de la demande: 04.05.2016
(73) Titulaire: L.T.L., 40700 Hagetmau (FR)
(72) Inventeur: LABORDE, Alain, Marie-Pierre, 40700 HAGETMAU (FR); TOULOUSE, Dominique, 40330 BRASSEMPOUY (FR)
(74) Mandataire: Aquinov

(56) Documents cités:
- WO-A2-2013/040392
- FR-A1- 2 936 518
- DATABASE CA [Online] CHEMICAL ABSTRACTS SERVICE, COLUMBUS, OHIO, US; 2010, GORECKI, HENRYK ET AL: "Method for production of suspension organomineral fertilizer", XP002742284, extrait de STN Database accession no. 2010:1543653
- denisdd: "galet presse à pellets", Usinages , 12 août 2013 (2013-08-12), page 7PP, XP002755187, Extrait de l'Internet: URL:http://www.usinages.com/threads/galet- presse-a-pellets.57675/print [extrait le 2016-03-08]

## Description

La présente invention concerne un procédé de fabrication d'une composition d'engrais organique à base de plumes et plus particulièrement de plumes de poulet, d'oie et de canard. La présente invention vise un dispositif associé et une composition d'engrais obtenue par ledit procédé.

Les plumes d'oie, de canard, de poulets notamment sont issus de la transformation des volatiles dans l'industrie agroalimentaire et sont considérées comme des déchets.

Une solution consiste à les incinérer mais il faut alors soit disposer d'un brûloir adapté or lorsque les quantités sont industrielles, les normes environnementales viennent rapidement compliquer les installations, soit les transporter vers un incinérateur ce qui est coûteux en regard du ratio poids / volume et peu écologique.

Une autre solution consiste à valoriser ces plumes. On sait que certains duvets peuvent faire l'objet d'une valorisation particulièrement intéressante à titre d'isolant pour les vêtements ou les accessoires de literie mais ceci concerne une quantité limitée des résidus de plumes, comparée au volume total de plumes généré par les abattoirs.

Une autre solution consiste à valoriser les plumes, quelle qu'en soit l'origine, qui sont des produits organiques, pour les transformer en engrais organiques.

On connaît ainsi une demande de brevet FR 2 936 518 qui a pour objectif de fabriquer un engrais organique par broyage de plumes.

Le procédé consiste à étuver les plumes pour assurer un traitement de sanitarisation, l'étuvage se déroulant au-delà de 100°C, suivi d'un séchage.

Le broyage des plumes sèches est assuré par un broyeur à lames qui conduit à la production de poudre, les fines étant aspirées à travers un cyclone qui assure la séparation.

La poudre reçoit un liant respectant l'environnement, à savoir du sulfonate de lignine et/ou de la mélasse pour permettre une granulation par agglomération de la poudre.

En effet la kératine ne peut pas être "collée", elle est donc généralement enrobée de sulfonate de lignine qui assure la cohésion des particules découpées de kératine.

L'engrais est ainsi fabriqué et présenté sous forme de granulés de façon à faciliter l'épandage. L'engrais obtenu est un engrais NPK riche en azote mais qui est d'origine organique et qui donc ne brûle pas les plants, même utilisé en surdosage.

Ce procédé de fabrication d'un engrais à partir de plumes est attractif mais reste incomplet et non industriel.

Ce procédé prévoit une sanitarisation des plumes par un chauffage préalable et un séchage, ce qui est consommateur d'énergie d'une part, qui requiert une installation d'autre part et enfin, qui est chronophage.

Si ce procédé est intéressant, il s'avère aussi que l'étape de broyage/granulation est complexe car il faut faire passer le produit broyé avec son liant dans une extrudeuse/granulatrice, notamment une extrudeuse/granulatrice à galets, et la montée en température provoque des problèmes d'encrassement rapide de la filière de l'extrudeuse/granulatrice du fait de la présence du liant à base de sucre.

L'extrudeuse/granulatrice monte donc en température du fait du ralentissement du débit et on entre dans un cercle vicieux, si bien que le bouchage de la filière intervient dans des temps très courts, de l'ordre de quelques secondes, interdisant de fait une exploitation industrielle. Une solution consiste à adjoindre de l'eau mais le sulfonate de lignine par exemple réagit avec l'eau et limite sa capacité d'adhésion sur la kératine et il y a donc dégradation du produit final lorsque la proportion d'eau est fortement augmentée.

Il convient aussi de noter que les plumes sont des matériaux qui sont isolants et donc des matériaux qui n'absorbent pas la chaleur, contrairement à beaucoup d'autres matériaux. Si cette chaleur n'est pas évacuée rapidement, elle contribue à l'augmentation de la température, ce qui conduit à une carbonisation de la matière première.

**On connaît aussi le document** WO 2013/040392 **qui mentionne la fabrication d'un engrais à partir de matière première organique mais n'incluant pas de plumes si bien que les problèmes engendrés par les plumes dans le procédé de granulation n'ont pas à être résolus et ce document obtient un produit différent en ce sens qu'il n'utilise pas une charge car le seul composé minéral est du phosphate, l'antiadhésif est absent du fait de l'absence de plumes. Ce document est obligé de prévoir une sanitarisation à la vapeur, ce qui illustre bien l'art antérieur.**

C'est le but de la présente invention de proposer un procédé qui inclut la sanitarisation et qui évite les problèmes liés à l'extrusion/granulation.

Le procédé selon la présente invention est maintenant décrit en détail suivant un mode de réalisation particulier, non limitatif.

Afin de représenter le procédé et le dispositif associé, il est prévu, en association avec la présente description, de représenter sur des dessins les éléments figuratifs, les différentes figures de ces dessins étant relatives à un mode de réalisation particulier, non limitatif, ces figures représentant respectivement :

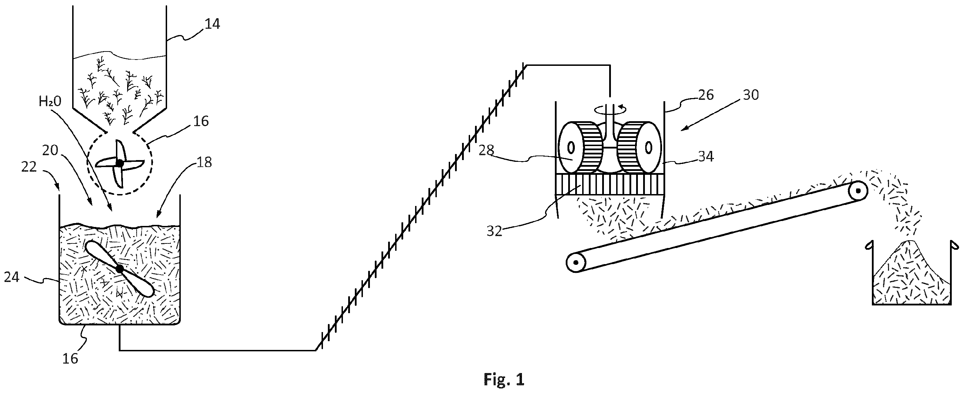

- Figure 1 : une vue d'un synoptique général du procédé
- Figure 2 : un schéma détaillé d'une ligne de fabrication, permettant la mise en œuvre du procédé, de façon optimisée, avec une vue de détail schématique du broyeur.

Le procédé consiste en une première étape 10 à réaliser une première composition 12 intermédiaire.

Cette composition intermédiaire comprend des plumes 14 broyées, notamment par passage à travers un broyeur 16, avec une granulométrie comprise de préférence entre 0,5 et 1,5 cm. Ces plumes 14 broyées ne subissent aucun traitement préalable de sanitarisation qui est obtenue directement lors du broyage, par l'échauffement même.

Pour obtenir le produit intermédiaire, ces plumes broyées sont mélangées avec un liant 16 adjuvanté comprenant au moins :
- Un agent antiadhésif tel qu'un extrait liquide 18 contenant du sucre comme de la mélasse et/ou de la vinasse et/ou de l'amidon
- Un liant 16 de kératine tel qu'un extrait de sulfonate de lignine 20, sous forme solide ou de liqueur notamment, nécessairement organique,
- Une charge 22, d'origine organique ou minérale, en l'occurrence de la poudre d'os ou du talc.

Cette composition est maintenue en cuve tampon 24 avec adjonction d'eau au maximum 15 à 25% en poids du poids total de la composition intermédiaire, de préférence 20%.

Ladite composition intermédiaire est agitée régulièrement afin d'éviter la décantation et une séparation de phase.

Les quantités utilisées pour la réalisation de la composition intermédiaire (Prémix) sont de l'ordre de :
- 70 à 80% en poids de plume, et
- 20 à 30% en poids du liant adjuvanté.

Plus particulièrement, selon un mode de réalisation particulier, non limitatif, le liant adjuvanté comprend une composition incluant :
- 2 à 15% en poids d'agent antiadhésif.
- 10 à 15% en poids de charge,
- 5 à 10% en poids de liant de kératine, et

Cette composition intermédiaire est reprise pour la fabrication des granulés.

La fabrication des granulés est réalisée par une extrudeuse/granulatrice 26, à galets 28.

La composition intermédiaire est introduite dans l'extrudeuse/granulatrice 26 munie d'une tête 30 comprenant une plaque filière 32 de façon à générer des cordons de matière, d'un diamètre sensiblement égal à celui des granulés à fabriquer.

L'extrudeuse/granulatrice 26 dispose d'une enceinte 34, et la température monte au-delà de 73°C de façon à assurer une sanitarisation par destruction des organismes pathogènes. La limite haute en température est fixée à 150°C car au-delà la composition peut brûler et, par la même, perdre ses propriétés. La température limite de 135° est conseillée.

La plaque filière 32, qui se trouve donc en sortie de l'extrudeuse/granulatrice, est, de façon préférentielle, refroidie de façon à contrôler la montée en température et éviter tout emballement, celui-ci étant quasi instantané. L'échauffement par la pression exercée par les galets et par le passage de la matière à travers les trous de la plaque épaisse, conduit à des montées en température de carbonisation de la composition en quelques secondes.

Il est donc nécessaire de prévoir une gestion appropriée qui est requise de façon à ne pas provoquer une augmentation de la température par frottement des galets contre la filière. C'est là un problème important à résoudre car une fois la composition carbonisée, les résidus bloquent les trous de la filière et il faut procéder à un démontage complet et à un nettoyage de chacun des trous de ladite plaque filière.

Il convient aussi d'entretenir la plaque filière et de procéder à son nettoyage de façon régulière même avec un pilotage optimisé car il se produit inévitablement un encrassement.

Les granulés issus de la composition se forment dès la sortie de la filière et ces granulés sont recueillis en sortie pour être dirigés vers une station de tri éventuel et vers une unité de conditionnement.

Le conditionnement peut être du type big-bag ou du type sachet de plus petite quantité en fonction des marchés visés.

La filière est maintenue à une température régulée et comprend des moyens pour assurer son refroidissement extrêmement rapidement.

Le refroidissement de la filière peut être réalisé par projection d'eau orientée directionnellement.

Il reste un autre problème à résoudre, à savoir l'évacuation de la vapeur d'eau susceptible de s'accumuler dans l'enceinte 34 du fait de l'évaporation par échauffement de la composition extrudée sous forme de granulés.

En effet, si on évacue la vapeur d'eau de façon trop importante, il se produit une décohésion liée au sulfonate de lignine qui, en présence de l'eau, perd son rôle de liant.

De même, si on maintient toute la vapeur d'eau, il se produit alors un effet de décohésion également lié au fait que le sulfonate de lignine ne joue plus son rôle de liant non plus.

A cet effet, les vapeurs et les matières entraînées avec la vapeur d'eau sont dirigées vers un tunnel de décompression de façon à ne pas provoquer une extraction trop rapide de la vapeur qui en se détendant trop vite provoquerait une dégradation de la qualité des granulés produits au final.

Dans le cadre d'un exemple non limitatif, les granulés d'engrais sanitarisés, ainsi obtenus, à partir de plumes de poulets conduisent aux dosages suivants en NPK (Azote Phosphore Potassium) :
- 11 % Azote,
- 3% Phosphore,
- 2% Potassium,

le solde étant de la matière organique.

Avec les ratios suivants :
- 80% en poids de plume, et
- 20% en poids du liant adjuvanté.

Et un liant ayant la composition suivante :
- 5% de vinasse
- 5% de sulfonate de lignine, et
- 10% en poids de poudre d'os

On peut obtenir des engrais avec des plages suivantes de valeurs avec le procédé selon la présente invention, notamment en fonction de la nature des plumes :
- 10 à 14 % Azote
- 0,5 à 4% Phosphore
- 0,5 à 4% Potassium

L'engrais obtenu est ainsi purement organique et peut être produit de façon industrielle, en continu.

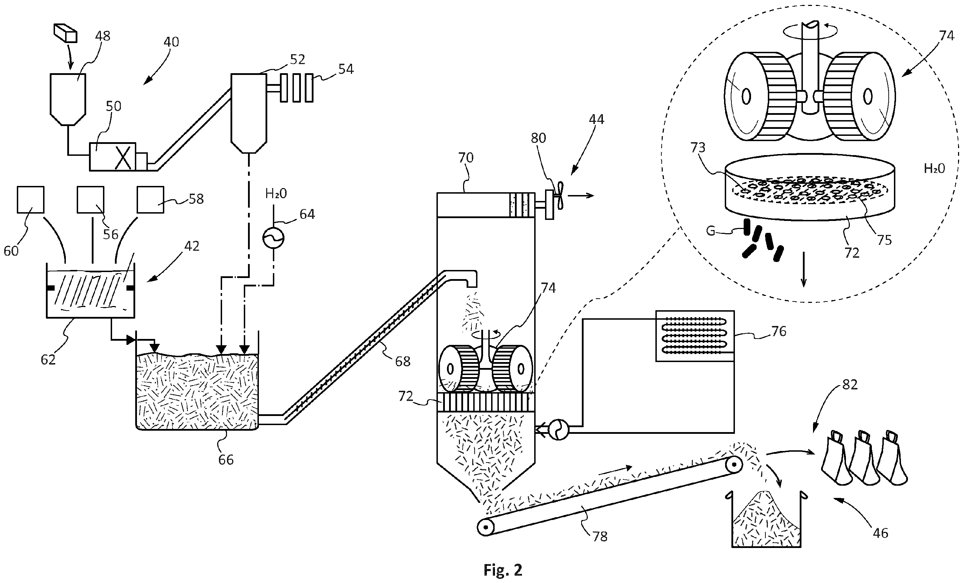

Sur la figure 2, on a représenté une ligne plus détaillée et spécifiquement adaptée à la mise en œuvre du procédé, tandis que la **loupe de la** **figure 2** permet de mieux appréhender les moyens d'extrusion/granulation.

Sur la figure 2, on peut distinguer une zone 40 plume, une zone 42 pré-mélange, une zone 44 d'extrusion/granulation et une dernière zone 46 de conditionnement.

Dans la zone 40 plume, il est prévu des moyens 48 de stockage dynamique des plumes P, avec une aération dynamique. Cette aération dynamique permet d'assurer un bon décolmatage des plumes entre elles, suite à leur stockage en balles compressées sur les lieux de production, ce qui est le moyen le plus aisée pour assurer un transport adapté. De plus le stockage dynamique permet une alimentation continue et non pas une alimentation liée à l'utilisation de chacune des balles.

Dans cette zone 40 plume, il est aussi prévu un broyeur 50, du type à couteaux par exemple qui est alimenté à débit continu, à partir des moyens 48 de stockage dynamique.

Les plumes P ainsi broyées sont accumulées dans un silo 52 tampon, avec des moyens 54 de recyclage des fines, systématiquement.

La zone 42 pré-mélange comporte des moyens 56 de stockage du liant à savoir le sulfonate de lignine, des moyens 58 de stockage de l'antiadhésif, la vinasse et des moyens 60 de stockage de la charge, en l'occurrence de la poudre d'os.

Cette zone 42 pré-mélange inclut également un bac 62 de mixage intime des composés avec les plumes, ce bac assurant le stockage.

De l'eau est ajoutée par une alimentation 64 avec un contrôle extrêmement précis en fonction de l'hygrométrie ambiante et de la texture interne du pré-mélange, ceci afin de garantir un pourcentage d'eau adapté dans la composition soumise à extrusion/granulation.

Cette composition, issue d'une unité 66 de mélange de l'eau et des composés du bac 62 de mixage est conduite, par exemple grâce à un convoyeur 68 à vis, vers des moyens 70 d'extrusion/granulation.

Ces moyens 70 d'extrusion/granulation comprennent une platine 72 épaisse, en forme de disque, munie de trous 73 au diamètre des granulés G à produire, ladite platine étant disposée horizontalement.

Cette platine 72 épaisse est surmontée, d'un train 74 de galets, en l'occurrence, trois galets, avec des moyens de réglage de la distance entre la platine et lesdits galets. Ces galets sont mis en rotation autour d'un axe central par rapport à la platine 72 épaisse par des moyens non représentés et bien connus tel qu'un moteur électrique et un renvoi mécanique. Le train de galets tourne de façon centrée par rapport à la platine 72 et les galets montés radialement, tournent suivant un cercle médian du disque. La largeur des galets couvre une grande partie de la surface de ladite platine 72 épaisse, sur toute la zone comprenant des trous.

Le convoyeur 68 délivre la composition directement sur la platine 72 épaisse.

La platine 72 épaisse comporte un réseau 74 d'injection de façon à permettre une injection de fluide dans la zone, en l'occurrence une injection d'eau refroidie de façon à maîtriser la température de ladite platine 72 épaisse.

L'eau est traitée par une unité 76 de refroidissement qui peut comporter une cuve tampon si nécessaire afin de disposer en permanence d'un volume d'eau refroidie.

En dessous de la platine 72 épaisse, dans le volume confiné, il est prévu un convoyeur 78 de collecte des granulés G fabriqués.

En partie haute de l'extrudeuse/granulatrice, on confine également l'atmosphère de façon à traiter les poussières au-dessus de la plaque 72 épaisse lors de l'opération d'extrusion/granulation, ceci au moyen d'un filtre/extracteur 80.

Un criblage éventuel est assuré sur les granulés produits avant le conditionnement réalisé au sein d'une unité 82 de conditionnement adapté.

Le fonctionnement d'une telle installation est maintenant décrit afin de bien montrer la complexité de pilotage liée à la nature de la composition comportant des composés délicats à manipuler simultanément.

Les plumes brutes sont donc aérées de façon à permettre un déliassage des plumes P et à faciliter la coupe par le broyeur 50 à lames. Les plumes P broyées sont transférées vers le silo 52 tampon où elles sont simplement collectées, sans traitement supplémentaire.

Le traitement des fines et poussières par les moyens 54 évite la diffusion de particules de plumes dans l'atmosphère.

Ce silo 52 tampon assure aussi une alimentation régulière en plumes broyées de la chaîne de fabrication de l'engrais recherché.

Les liant, charge et antiadhésif sont mélangés.

Ce pré mélange est à son tour mélangé avec les plumes broyées.

Une quantité d'eau est ajoutée avec une grande précision.

Compte tenu de la teneur en eau de la vinasse utilisée, on ajuste pour que la composition présente un taux d'humidité de 15 à 25% en poids, en fonction notamment du degré hygrométrique ambiant.

Ce taux est très important car de son ajustement dépend la consistance des granulés extrudés et de leur tenue mécanique.

Ce paramètre doit être géré avec une grande précision.

Le mélange plumes broyées, liant, antiadhésif et charge est délivré par le convoyeur 68 sur la platine 72 épaisse.

Le train de galets étant en rotation, il exerce une pression importante sur cette composition, ce qui a pour effet de presser ladite composition à travers les trous de la plaque épaisse.

Le poids des galets est très important et la composition est poussée avec une très forte pression à travers la plaque 72 épaisse, plus précisément à travers les trous 73 de ladite plaque.

La composition en sortie de la plaque présente des portions cylindriques avec une cohésion suffisante pour se tenir sur une longueur de 2 à 4 cm et un diamètre de 0,5 cm, pour donner un ordre d'idée. Ces dimensions sont également adaptées pour permettre une bonne dispersion et une bonne déliquescence ultérieure en utilisation, une fois les granulés épandus. La cohésion mécanique est aussi utile lors de l'épandage mécanique par exemple à partir d'un distributeur d'engrais à plateaux.

Cette opération d'extrusion/granulation est très délicate car durant cette très forte poussée mécanique générée par les galets, il se produit un très fort échauffement.

Si la température reste en-dessous de 135°C, au maximum 150°C, l'extrusion se poursuit.

Il est à noter que la température de la plaque 72 épaisse est à surveiller car l'emballement de la montée en température est extrêmement rapide, de l'ordre de quelques secondes

En effet, si la composition est hors des plages de travail, il se trouve que l'extrusion provoque une montée en température et si la température excède 150°C, le produit carbonise et de fait ne s'extrude plus, il bloque les trous et le phénomène s'emballe au point de bloquer quasiment tous les trous de la plaque 72 épaisse.

La plaque épaisse doit alors être démontée pour déboucher mécaniquement tous les trous. Aussi, en fonction de la conduite et des paramètres enregistrés, il est possible de refroidir quasi instantanément la plaque épaisse.

La plaque étant refroidie, la composition ne monte pas en température, ne brûle pas et donc l'extrusion/granulation peut se poursuivre. La température de la composition est maintenue entre 73°C et 135°C.

La température de la plaque doit être conservée suffisamment élevée pour assurer une sanitarisation de la composition soit au-delà de 73°C et à une température inférieure à celle de la carbonisation des matières organiques en l'occurrence 135°C avec un maximum de 150°C.

Ceci ne pose donc aucun problème et le produit est ainsi parfaitement sanitarisé.

Les granulés sont ensuite recueillis par le convoyeur 78.

Le tri éventuel supplémentaire permet d'éliminer les fines et de conserver les granulés ayant une résistance mécanique suffisante.

Les granulés, de forme cylindrique, sont ensuite conditionnés en fonction des usages ultérieurs, soit en petits conditionnements de quelques kilogrammes soit en big-bag de plusieurs centaines de kilos.

Il est aussi possible d'injecter de la vapeur afin de réaliser un décolmatage de la plaque 72 épaisse par le dessous, ceci régulièrement mais aussi pour contribuer au refroidissement de la plaque épaisse.

## Revendications

1. Procédé de fabrication d'un engrais à base de plumes broyées, comprenant les étapes suivantes :
- réalisation d'une composition intermédiaire comprenant :
∘ des plumes broyées,
∘ un liant à base de sulfonate de lignine,
∘ un antiadhésif,
∘ une charge,
la répartition étant de 70 à 80 % plumes et de 20 à 30 % de liant adjuvanté comprenant le sulfonate de lignine, l'antiadhésif et la charge,
∘ eau,
- mélange de la composition intermédiaire,
- extrusion / granulation de la composition intermédiaire en refroidissant la filière de l'extrudeuse pour maintenir la composition entre 73°C et 135°C, et
- extraction de l'eau en excès lors de ladite extrusion / granulation de façon à obtenir des granulés d'engrais organique.

2. Procédé de fabrication d'un engrais à base de plumes broyées, selon la revendication 1, **caractérisé en ce que** les plumes sont broyées à des dimensions comprises entre 0,5 et 1,5 cm.

3. Procédé de fabrication d'un engrais à base de plumes broyées, selon la revendication 1 ou 2, **caractérisé en ce que** l'anti-adhésif est choisi parmi des agents contenant du sucre.

4. Procédé de fabrication d'un engrais à base de plumes broyées, selon la revendication 3, **caractérisé en ce que** les agents contenant du sucre sont choisis parmi la vinasse et/ou l'amidon.

5. Procédé de fabrication d'un engrais à base de plumes broyées selon l'une quelconque des revendications précédentes, **caractérisé en ce que** la charge est choisie parmi la poudre d'os et/ou le talc.

6. Procédé de fabrication d'un engrais à base de plumes broyées, selon l'une quelconque des revendications précédentes, **caractérisé en ce que** l'on associe le liant, l'antiadhésif et la charge pour former un pré mélange, puis on associe à ce pré mélange, les plumes broyées et l'eau pour former la composition intermédiaire.

7. Procédé de fabrication d'un engrais à base de plumes broyées, selon l'une quelconque des revendications précédentes, **caractérisé en ce que** le ratio des composés du liant adjuvanté est :
- 10 à 15 % en poids de poudre d'os
- 5 à 10 % de sulfonate de lignine, et
- 2 à 15 % de vinasse.

8. Procédé de fabrication d'un engrais à base de plumes broyées, selon l'une quelconque des revendications précédentes, **caractérisé en ce que** l'on assure un décolmatage de la filière de l'extrudeuse par injection de vapeur.

9. **Composition d'engrais organique obtenue à partir du procédé selon l'une quelconque des revendications précédentes, obtenue à partir de 70 à 80 % plumes et de 20 à 30 % de liant adjuvanté comprenant du sulfonate de lignine, un antiadhésif et une charge, caractérisée en ce que en ce qu'**elle comprend :
- 10 à 14 % Azote
- 0,5 à 4 % Phosphore
- 0,5 à 4 % Potassium

10. Utilisation de la composition d'engrais organique à base de plumes selon la revendication 9, obtenue par le procédé selon l'une **des revendications 1 à 8, caractérisée en ce qu'**elle est appliquée en agriculture biologique.

## Patentansprüche

1. Verfahren zur Herstellung eines Düngemittels auf der Basis von zerkleinerten Federn mit den folgenden Verfahrensschritten:
- Herstellung einer Zwischenzusammensetzung mit:
∘ zerkleinerten Federn,
∘ einem Bindemittel auf der Basis von Ligninsulfonat,
∘ einem Antihaftmittel, und
∘ einem Füllstoff,
mit einer Verteilung von 70 bis 80% Federn und von 20 bis 30% Hilfsbindemittel, das Ligninsulfonat, das Antihaftmittel und den Füllstoff umfasst,
∘ Wasser,
- Mischen der Zwischenzusammensetzung,
- Extrudieren/Granulieren der Zwischenzusammensetzung, wobei die Düse des Extruders gekühlt wird, um die Zusammensetzung zwischen 73 °C und 135 °C zu halten, und
- Extrahieren von überschüssigem Wasser beim Extrudieren/Granulieren, um Granulat aus organischem Dünger zu erhalten.

2. Verfahren zur Herstellung eines Düngemittels auf der Basis von zerkleinerten Federn nach Anspruch 1, **dadurch gekennzeichnet, dass** die Federn auf Abmessungen zwischen 0,5 und 1,5 cm zerkleinert werden.

3. Verfahren zur Herstellung eines Düngemittels auf der Basis von zerkleinerten Federn nach Anspruch 1 oder 2, **dadurch gekennzeichnet, dass** das Antihaftmittel aus zuckerhaltigen Mitteln ausgewählt ist.

4. Verfahren zur Herstellung eines Düngemittels auf der Basis von zerkleinerten Federn nach Anspruch 3, **dadurch gekennzeichnet, dass** die zuckerhaltigen Mittel aus Vinasse und/oder Stärke ausgewählt sind.

5. Verfahren zur Herstellung eines Düngemittels auf der Basis von zerkleinerten Federn nach einem der vorhergehenden Ansprüche, **dadurch gekennzeichnet, dass** der Füllstoff aus Knochenmehl und/oder Talk ausgewählt ist.

6. Verfahren zur Herstellung eines Düngemittels auf der Basis von zerkleinerten Federn nach einem der vorhergehenden Ansprüche, **dadurch gekennzeichnet, dass** das Bindemittel, das Antihaftmittel und der Füllstoff zusammengesetzt werden, um eine Vormischung zu bilden, und dass dann die zerkleinerten Federn und Wasser dieser Vormischung hinzugesetzt werden, um die Zwischenzusammensetzung zu bilden.

7. Verfahren zur Herstellung eines Düngemittels auf der Basis von zerkleinerten Federn nach einem der vorhergehenden Ansprüche, **dadurch gekennzeichnet, dass** die Bestandteile des Hilfsbindemittels im folgenden Verhältnis vorliegen:
- 10 bis 15 Gew.-% Knochenmehl
- 5 bis 10 Gew.-% Ligninsulfonat und
- 2 bis 15% Vinasse.

8. Verfahren zur Herstellung eines Düngemittels auf der Basis von zerkleinerten Federn nach einem der vorhergehenden Ansprüche, **dadurch gekennzeichnet, dass** eine Reinigung der Düse des Extruders/Granulators durch Einleiten von Dampf gewährleistet wird.

9. Organische Düngemittelzusammensetzung, die mit dem Verfahren nach einem der vorhergehenden Ansprüche hergestellt worden ist und auf der Grundlage von 70 bis 80% Federn und von 20 bis 30% Hilfsbindemittel erhalten worden ist, das Ligninsulfonat, ein Antihaftmittel und einen Füllstoff aufweist, **dadurch gekennzeichnet, dass** diese umfasst:
- 10 bis 14% Stickstoff
- 0,5 bis 4% Phosphor und
- 0,5 bis 4 % Kalium

10. Verwendung der organischen Düngemittelzusammensetzung auf der Basis von Federn nach Anspruch 9, die durch das Verfahren nach einem der Ansprüche 1 bis 8 hergestellt worden ist, **dadurch gekennzeichnet, dass** diese im ökologischen Landbau angewendet wird.

## Claims

1. A method for manufacturing a fertiliser based on ground feathers, comprising the following steps:
- producing an intermediate composition comprising:
∘ ground feathers,
∘ a binder based on lignin sulfonate,
∘ an anti-adhesive,
∘ a filler,
the distribution being 70% to 80% feathers and 20% to 30% admixed binder comprising the lignin sulfonate, the anti-adhesive and the filler,
∘ water,
- mixing the intermediate composition,
- extruding/granulating the intermediate composition, while cooling the extruder die in order to maintain the composition between 73°C and 135°C, and
- extracting the excess water during said extrusion/granulation so as to obtain organic fertiliser granules.

2. A method for manufacturing a fertiliser based on ground feathers, according to claim 1, **characterised in that** the feathers are ground to dimensions of between 0.5 and 1.5 cm.

3. A method for manufacturing a fertiliser based on ground feathers, according to claim 1 or 2, **characterised in that** the anti-adhesive is chosen from agents containing sugar.

4. A method for manufacturing a fertiliser based on ground feathers, according to claim 3, **characterised in that** the agents containing sugar are chosen from slops and/or starch.

5. A method for manufacturing a starch based on ground feathers according to any of the preceding claims, **characterised in that** the filler is chosen from bone powder and/or talc.

6. A method for manufacturing a fertiliser based on ground feathers, according to any one of the preceding claims, **characterised in that** the binder, the anti-adhesive and the filler are combined in order to form a premixture, then the ground feathers and the water are combined with this premixture in order to form the intermediate composition.

7. A method for manufacturing a fertiliser based on ground feathers, according to any of the preceding claims, **characterised in that** the ratio of the compounds of the admixed binder is:
- 10% to 15% by weight bone powder
- 5% to 10% lignin sulfonate, and
- 2% to 15% slops.

8. A method for manufacturing a fertiliser based on ground feathers, according to any of the preceding claims, **characterised in that** an unclogging of the extruder die is provided by injecting steam.

9. An organic fertiliser composition obtainable using the method according to any of the preceding claims, obtainable from 70% to 80% feathers and 20% to 30% admixed binder comprising lignin sulfonate, an anti-adhesive and a filler, **characterised in that** it comprises:
- 10% to 14% nitrogen
- 0.5% to 4% phosphorus
- 0.5% to 4% potassium.

10. Use of the organic fertiliser composition based on feathers according to claim 9, obtained by the method according to one of claims 1 to 8, **characterised in that** it is applied in biological agriculture.
